(19) Europäisches Patentamt
European Patent Office
Office européen des brevets

(11) Publication number: **0 390 189 B1**

(12) # EUROPEAN PATENT SPECIFICATION

(45) Date of publication of patent specification: **30.11.94**

(51) Int. Cl.[5]: **C08G 69/16**, C08L 77/02, C08G 69/40

(21) Application number: **90106153.1**

(22) Date of filing: **30.03.90**

(54) **Process for producing large-size formed articles of modified polyamide.**

(30) Priority: **31.03.89 IT 1997289**

(43) Date of publication of application: **03.10.90 Bulletin 90/40**

(45) Publication of the grant of the patent: **30.11.94 Bulletin 94/48**

(84) Designated Contracting States: **AT BE CH DE ES FR GB LI NL SE**

(56) References cited:
**EP-A- 0 324 432**
**DE-A- 3 521 230**
**US-A- 4 022 719**

**PATENT ABSTRACTS OF JAPAN vol. 9, no. 184 (C-294)(1907) 30 July 1985,& JP-A-6053536**

(73) Proprietor: **ENICHEM S.p.A.**
**Piazza Repubblica, 16**
**I-20124 Milano (IT)**

(72) Inventor: **Furlan, Piero, Dr. Chem.**
**8/II Borgo del Mestre**
**I-31100 Treviso (IT)**
Inventor: **Tonti, Sergio, Dr. Chem.**
**8, Via E. Toti**
**I-30173 Mestre, Venezia (IT)**
Inventor: **Talamini, Gianpietro, Dr.Chem.**
**71, Via Oberdan**
**I-30173 Mestre, Venezia (IT)**

(74) Representative: **Weinhold, Peter, Dr. et al**
**Patentanwälte Dipl.-Ing. G. Dannenberg**
**Dr. P. Weinhold**
**Dr. D. Gudel**
**Dipl.-Ing. S. Schubert**
**Dr. P. Barz**
**Siegfriedstrasse 8**
**D-80803 München (DE)**



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a process for producing large size formed articles of modified polyamide by means of anionic polymerization of one or more omega-lactams, said articles being obtained according to the casting or rotational moulding technology (see for example NYLON PLASTICS, edited by M.I. KOHAN; John Wiley and Sons Publishers; 1973).

The anionic polymerization of omega-lactams in a mold (according to the casting or rotational moulding technology) is a technique which allows to obtain articles of large dimensions and variable thickness which would be difficult and not profitable to obtain by means of the conventional techniques based on the extrusion or injection moulding of polyamide granules. In fact, it is possible to take advantage of the possibility of filling the mould with a low-viscosity liquid mixture (molten omega-lactam + catalyst + activator) and to thus operate with lower injection pressures, simpler moulds and shorter filling times, even if the moulds have large dimensions and complex shapes. The resulting polyamide has, in comparison to the hydrolytic polyamide usually produced and used in granules, a higher molecular weight (and a higher crystallinity) and exhibits a higher modulus, a higher solvent resistance, a lower permeability to gases and a lower moisture absorption, resulting in a higher dimensional stability. The anionic polymerization process is well suited for the modification in situ(during the formation of the polymer) of the polyamide with proper elastomerizing agents, thereby increasing the impact strength thereof. The polymer thus obtained is to possess, however, not only a high impact strength (resilience), but also a good homogeneity at each point of the manufactured article, no matter how large the dimensions are, as well as smooth, bright and aesthetically appealing surfaces.

JP-A-60 53 536 (Patent Abstracts of Japan, vol.9, no.184 (C-294)(1907), 30 July 1985, discloses a process for the production of shock-resistant polyamide wherein an ω-lactam is reacted with a polyoxyalkylene polyamine in the presence of a sodium or potassium salt of the lactam as catalyst and a diisocyanate or a reaction product thereof with an ω-lactam as preferred cocatalyst.

It has now been found that it is possible to produce, by means of the casting technology or rotational moulding technology, formed articles of large size and thickness (homogeneous at each point and with a low content of residual monomer), having a wider range of mechanical properties, which meet the applicative requirements, both as finished articles and as semifinished articles, even better.

In its broadest aspect, the present invention relates to a process for the production of preferably large-size articles of modified polyamide, by means of polymerization, according to the casting technology or the rotational moulding technology, of a mixture containing:

(a) an omega-lactam;

(b) a polymerization catalyst selected from the alkali metal salts (particularly the sodium and potassium salts) of said omega-lactam and mixtures thereof;

(c) a polyoxyalkylene-polyamine having an average molecular weight of from 400 to 5,000 and an average amine functionality ranging from 1.9 to 2.5 as elastomerizing agent;

(d) a polyisocyanate having all of its isocyanate groups blocked with a lactam as activator (promotor);

said reagents (a) to (d) being (i) distributed, prior to polymerization, among two distinct feeding tanks, one of said tanks containing a part of the omega-lactam (a) and the catalyst (b) and the other tank containing the remaining amount of omega-lactam (a) and the activator (d), the polyoxyalkylene-polyamine (c) being added to one of said two tanks or both; and (ii) first mixed and then transferred, at a temperature of from above 110 °C to 125 °C, into a mould heated to from 130 °C to 170 °C, preferably from 130 to 160 °C.

EP-A-324 432, a document relevant under Art. 54(3) EPC, discloses a similar process, the difference being that the temperature at which the mixture of components (a) to (d) is transferred into the mould does not exceed 110 °C.

The process according to the present invention makes it possible to obtain formed articles of excellent quality, which exhibit smooth, bright and appealing surfaces and furthermore:

- a total homogeneity at each point, both of the inside and of the outside, no matter how large the thickness and the other dimensions are (in particular, it is possible to produce e.g. cylindrical bodies, for examples pulleys, having a diameter of up to 1 meter and pipes as long as 6 metres);
- extremely low residual monomer contents (residual monomers entail an undesirable transudation and a harmful plastization of the final product);
- a very high resiliency (generally equal to or higher than 200 J/m and frequently exceeding 425 or even 500 J/m) and a very high rigidity (high values of the flexural elastic modulus, usually equal to or higher than 1250, particularly 1270 MPa and frequently exceeding 1500 MPa);
- an excellent compressive strength (up to 40 MPa, with a consequent deformation of 2.5%) and a good heat deflection temperature (HDT) (equal to or higher than 60 °C).

Useful omega-lactams for the process of the present invention can be of different type, for example: gamma-butyrolactam, delta-valerolactam, epsilon-caprolactam, omega-enantholactam, omega-capryl-lactam, omega-undecanolactam and omega-lauryl-lactam, either individually or in combination with one another, epsilon-caprolactam, omega-lauryl-lactam and mixtures thereof being particularly preferred.

The catalysts to be utilized according to the invention are alkali metal lactamates. Sodium lactamate and/or potassium lactamate are preferably employed. Usually, a solution at 15-25% by weight of sodium or potassium lactamate in omega-lactam is utilized. The amount of catalyst generally ranges from 0.1 to 2 moles per 100 moles of (total) omega-lactam, preferably from 0.2 to 1.5, and particularly from 0.5 to 1.5 moles per 100 moles of lactam.

The polyoxyalkylene polyamines to be used as elastomeric modifier have an average amine functionality of from 1.9 to 2.5. They are generally utilized in amounts of from 1% to 60%, preferably from 3% to 40%, and particularly from 5 to 25% by weight, based on the total amount of reagents. Said polyoxyalkylene polyamines can be prepared, for example, by amination of the corresponding polyoxyalkylene glycols with $NH_3$ and are readily available on the market. Particularly preferred are polyoxypropylene diamines and polyoxytetramethylene diamines. Particularly advantageous results may be obtained by using polyoxypropylene diamines having an average amine functionality of about 2 and an average molecular weight ranging from 400 to 4,000 such as, for example, the products which are commercially known as JEFFAMINE® D 2000 or JEFFAMINE® D 4000, marketed by Texaco Chemical Company.

The polyisocyanates to be used as activators according to the present invention, after blocking with omega-lactam, preferably contain up to 30, particularly up to 20 carbon atoms in the basic carbon skeleton and can be (ar)aliphatic, cycloaliphatic and aromatic (including aliphatic-aromatic), such as,e.g., hexamethylene diisocyanate (HDI), optionally (partially) biuretized; toluene diisocyanate (TDI), optionally (partially) biuretized; methylene-bis(phenyl isocyanate) (MDI), optionally (partially) biuretized; HDI isocyanurate; mixtures thereof etc. HDI isocyanurate generally yields particularly desirable results.

The concentration of the (blocked) -NCO groups generally ranges from 0.2 to 15 equivalents, and preferably from 1 to 10 equivalents per 100 moles of total omega-lactam, corresponding to an equivalent ratio (NCO)/(omega-lactam) of from 0.002 to 0.15 and preferably from 0.01 to 0.10. Preferably the amount of activator (blocked diisocyanate) is proportional to the amount of polyoxyalkylene polyamine and such that the total number of (blocked) NCO equivalents is at least equal to the total number of the $NH_2$ groups (equivalents) which are present in the system (by addition of polyoxyalkylene polyamine). Desirably, the ratio of the total number of (blocked) -NCO equivalents to the total number of $NH_2$ equivalents is equal to or higher than 1 and preferably ranges from 1 to 3 and, even more preferred, from 1.5 to 2. As a function of the ratio of (blocked) polyisocyanate and modifier (polyoxyalkylene polyamine) as well as of the operative conditions it is possible to obtain a copolymer having a repeating block structure (for example polyamide + polyoxyalkylene-polyamine elastomerizing segment) or a mixture of homopolymer and copolymer with alternating repeating segments. When the molar ratio (blocked $NCO/NH_2$) is equal to or higher than 1, an improvement in the physical properties of the copolymer occurs. When the ratio is higher than 1.5, a by far higher resiliency than that of the non-modified polyamide may be obtained. For example, with 20% by weight of JEFFAMINE ® D 2000, the resiliency (Izod, determined on notched bar) can reach up to 500 J/m, without any too strong reduction of the fluxural modulus value (still exceeding 1000 and even 1250 MPa).

The amount of alkali metal lactamate (catalyst) having a (NM) group, where M is an alkali metal (ion), and the amount of polyisocyanate having all of its (NCO) groups blocked (activator) generally are such that the equivalent ratio:

(NCO)/(NM)

is equal to or higher than 1 and preferably ranges from 1 to 40, particularly from 1.5 to 15.

The equivalent ratio:

(NCO) - $(NH_2)$/(NM)

generally is equal to or higher than 0.01 and preferably ranges from 0.01 to 20.

Generally, the formed articles prepared according to the present invention have excellent color characteristics and exhibit a yellowing index, determined according to ASTM D 1925-70, of not higher than -10 and preferably not higher than -15.

According to the present invention the formulation components are distributed among two feeding tanks, one of which contains a part of the omega-lactam and the activator, while the other contains the remaining amount of omega-lactam along with the catalyst. The polyoxyalkylene polyamine can indifferently be placed into either of the tanks, depending on the total process scheme. According to a first scheme, activator, omega-lactam and polyoxyalkylene polyamine are mixed and molten and to the resulting mixture the catalyst, dissolved in molten omega-lactam, is added. The temperature of the mould is then brought to a value not lower than 130 °C. According to a second scheme, a mixture of polyoxyalkylene polyamine,

molten omega-lactam and catalyst is added to the activator, dissolved in the molten omega-lactam. The temperature of the mould is then brought to a value not below 130 °C. The two streams leaving the tanks can be measured by means of a proper device, mixed together in the desired ratio and introduced into the mould at a temperature of from above 110 °C to 125 °C. Polymerization (and subsequent crystallization) occur in the mould, preheated to a temperature of from 130 to 170 °C, preferably of from 130 to 160 °C, within a few minutes. If the process is conducted at a lower temperature than the polyamide softening point, the polymer can without difficulty be withdrawn from the mould already as finished article. Of course, polymerization (and subsequent crystallization) can be carried out in the presence of reinforcing agents, such as, for example, glass fibres or carbon fibres of various sizes, fabrics or mineral fillers, provided they are inert under the conditions employed and do not interfere with the polymerization. The use of glass or carbon fibres, optionally sized, is particularly advantageous when the rigidity of the manufactured article (i.e. the flexural modulus) is to be increased.

The formulations used according to the present invention are particularly suitable for producing a great variety of formed articles, such as flat sheets of different thickness, bars, pipes, tanks and other articles, which can be painted or mass-dyed (with the help of a masterbatch) without any problems. In particular, said formulations are suitable for producing flat parts, or in any case parts having a large linear extension, parts of ships or automobile bodies, or fixtures for shipyards, by means of casting or rotational moulding.

The following examples are given for merely illustrative purposes and do not limit in any manner the scope of the invention.

DEFINITIONS USED IN THE EXAMPLES

A. HDI: hexamethylene diisocyanate.
B. MDI: 4,4'-methylene bis(phenylisocyanate).
C. TDI: a mixture of 2,4-toluene-diisocyanate and 2,6-toluene diisocyanate, in a weight ratio of 80/20.
D. "HDI isocyanurate": compound of formula (I):

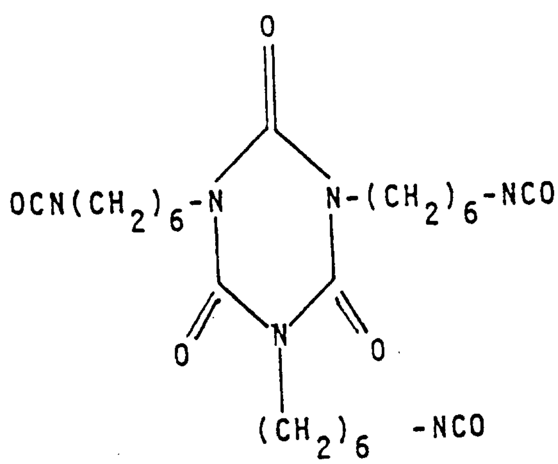

(I)

with a content of NCO groups equal to 22% by weight.
E. "Biuretized HDI": the compound of formula (II):

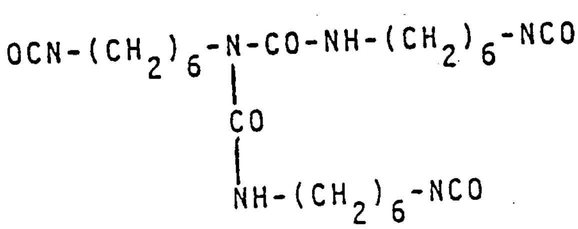

(II)

with a content of NCO groups equal to 22% by weight.
F. "Biuretized TDI": a compound analogous to the compound under point E, wherein the hexamethylene group $-(CH_2)_6-$ is substituted by a toluylene group.

G. "Partially biuretized TDI": a compound analogous to the compound under point F, wherein the biuretization is not complete and wherein the content of NCO groups, based on the total amount of TDI, either biuretized or non-biuretized, is 40% by weight.

H. "Biuretized MDI": a compound analogous to the compound under point E, wherein the hexamethylene group is substituted by a 4,4'-methylene-bisphenylene group.

K. "Partially biuretized MDI": a compound analogous to the compound under point H, wherein biuretization is not complete and wherein the content of NCO groups, based on the total amount of MDI, either biuretized or non-biuretized, is 27% by weight.

J. HDT (Heat Deflection Temperature): the minimum thermoplastic deformation temperature, determined (on the dry product) according to ASTM-D-648 (at 1.83 MPa).

L. Resiliency: the IZOD resiliency, determined by means of the notched-bar test on the dry product, at 23 °C, according to ASTM-D-256.

M. Flexural Modulus: the flexural elastic modulus, determined on the dry product, at 23 °C, according to ASTM-D-790.

N. Relative Viscosity: the viscosity (relative to the used solvent) of a solution containing 1 g of polymer dissolved in 100 ml of aqueous sulphuric acid (at 95.6% by weight of $H_2SO_4$).

P. Yellowing Index: determined according to ASTM-D-1925/70.

Note: In all tests a spontaneous detaching of the article from the mould (at the end of the polymerization and of the successive crystallization) could be observed. In other words, it was operated for a sufficiently long time to complete the polymerization and to allow the subsequent crystallization of the product, which causes a contraction of the volume and therefore a spontaneous detaching from the mould walls.

Example 1 (reference example)

In a jacketed heated tank (A) equipped with a stirrer and a bottom discharge, 549 g of epsilon-caprolactam, 66 g of a solution of Na-caprolactamate in epsilon-caprolactam (at 20% by weight) and 440 g of JEFFAMINE ® D 2000, a polyoxypropylene diamine marketed by Texaco Co. having an average molecular weight of about 2000, were molten and brought to 110 °C in a nitrogen atmosphere. In an analogous tank (B), 908.6 g of epsilon-caprolactam and 191.4 g of hexamethylene diisocyanate blocked with epsilon-caprolactam (pure diisocyanate = 33% by weight) were molten and brought to 110 °C in a nitrogen atmosphere. The contents of (A) and (B) were mixed and the resulting mixture was transferred into a cylindrical mould, heated to 150 °C, having a diameter of 15 cm and a height of 13 cm. After 40 minutes, a block of modified polyamide 6 detached spontaneously and could easily be withdrawn from the mold, the block being allowed to gradually cool in a heat-insulated container. The formed article was then cut; the inner sections appeared homogeneous, free from cavities and cracks. The appearance was good, i.e. the surface was smooth and bright. From the articles, samples were obtained which were used to determine the relative viscosity (at 20 °C) of a polymer solution at 1% (weight by volume) in $H_2SO_4$ at 95.6%, as well as the residual caprolactam content (1.4% by weight), by means of gas-liquid chromatography (GLC) of a polymer solution in $CF_3CH_2OH$; the results are indicated in Table 1.

Examples 2 to 4 (comparative tests)

Example 1 was repeated, employing a component mixing temperature equal to or lower than 100 °C. The polymer thus obtained exhibited cavities and cracks in the inside and/or a wax-like outer surface. These defects prevented the use of the product as such, as well the use of the semifinished products obtained therefrom; the results are reported in Table 1.

Examples 5 to 11

The procedure of example 1 was followed in said examples. Tables 2 and 3 indicate the compositions, mixing temperatures and temperatures of the mould used for each example, as well as the chemical and physical characteristics of the solid large-size manufactured articles thus obtained.

## TABLE 1

| EXAMPLE | | 1 | 2(**) | 3(**) | 4(**) |
|---|---|---|---|---|---|
| - caprolactam (CPL) | (% by weight) | 68.3 | 68.3 | 68.3 | 67.3 |
| - Na-CPL (at 20% in CPL) | (% by weight) | 3.0 | 3.0 | 3.0 | 3.0 |
| - HDI (at 33% in CPL) | (% by weight) | 8.7 | 8.7 | 8.7 | 8.7 |
| - JEFFAMINE® D 2000 | (% by weight) | 20.0 | 20.0 | 20.0 | 20.0 |
| Temp. of the mixer | (°C) | 110 | 90 | 100 | 95 |
| Temp. of the mould | (°C) | 150 | 150 | 130 | 150 |
| time | (minutes) | 40 | 40 | 30 | 40 |
| - aspect: outer | | good | good | good | good |
| inner | | homogeneous | (***) | (***) | (***) |
| - resiliency | (J/m) | - | - | - | - |
| - flexural modulus | (MPa) | - | - | - | - |
| - HDT | (°C) | - | - | - | - |
| - residual CPL | (% by weight) | 1.4 | - | - | - |
| - viscosity (*) | (at 20°C) | 2.3 | - | - | - |
| - yellowing index | | - | - | - | - |

n.d. = not determined.
(**) = comparative test.
(*) = relating to the utilized solvent.
(***)= very bad (presence of cracks and cavities)

TABLE 2

| EXAMPLE | | 5 | 6 | 7 |
|---|---|---|---|---|
| - caprolactam (CPL) | (% by weight) | 59 | 56.5 | 59 |
| - Na-CPL (at 20% in CPL) | (% by weight) | 6 | 6.0 | 6 |
| - TDI (at 20% in CPL) | (% by weight) | 15 | 17.5 | 15 |
| - JEFFAMINE® D 2000 | (% by weight) | 20 | 20.0 | 20 |
| Temp. of the mixer | (°C) | 120 | 120 | 125 |
| Temp. of the mould | (°C) | 150 | 150 | 150 |
| time | (minutes) | 120 | 100 | 65 |
| - aspect: outer | | good | good | good |
| inner | | homogeneous | homogeneous | homogeneous |
| - resiliency | (J/m) | 235 | 293 | 365 |
| - flexural modulus | (MPa) | 1459 | 1323 | 1322 |
| - HDT | (°C) | 65 | n.d. | n.d. |
| - residual CPL | (% by weight) | 1.2 | 1.7 | 1.9 |
| - relative viscosity | (at20°C) | 3.0 | 2.0 | 2.3 |

n.d. = not determined.

TABLE 3

| EXAMPLE | | 8 | 9 | 10 | 11 |
|---|---|---|---|---|---|
| - caprolactam (CPL) | (% by weight) | 52.6 | 62.1 | 56 | 47.0 |
| - Na-CPL (at 20% in CPL) | (% by weight) | 6.0 | 6.0 | 6 | 6.0 |
| - MDI (at 20% in CPL) | (% by weight) | 21.4 | - | - | - |
| - TDI (at 20% in CPL) | (% by weight) | - | 7.5 | - | - |
| - HDI (at 33% in CPL) | (% by weight) | - | 4.4 | - | - |
| - partially biuretized TDI (at 20% in CPL) | (% by weight) | - | - | 18 | - |
| - partially biuretized MDI (at 20% in CPL) | (% by weight) | - | - | - | 27 |
| - JEFFAMINE® D 2000 | (% by weight) | 20 | 20 | 20 | 20 |
| Temp. of the mixer | (°C) | 120 | 120 | 125 | 125 |
| Temp. of the mould | (°C) | 150 | 150 | 150 | 150 |
| time | (minutes) | 120 | 120 | 120 | 180 |
| - aspect: outer | | good | good | good | good |
| inner | | homogeneous | homogeneous | homogeneous | homogeneous |
| - resiliency | (J/m) | 300 | 548 | 431 | n.d. |
| - flexural modulus | (MPa) | 1375 | 1447 | 1058 | n.d. |
| - HDT | (°C) | 65 | 63 | n.d. | n.d. |
| - residual CPL | (% by weight) | 1.5 | 1.2 | 1.8 | n.d. |
| - relative viscosity | (at 20°C) | 2.0 | 2.7 | 3.2 | n.d. |

n.d. = not determined.

## Claims

1. Process for producing formed articles of modified polyamide by means of polymerization, according to the casting or rotational moulding technology, of a mixture containing:

(a) an omega-lactam;

(b) a polymerization catalyst selected from the alkali metal salts of said omega-lactam and mixtures thereof;

(c) a polyoxyalkylene-polyamine having an average molecular weight of from 400 to 5,000 and an average amine functionality ranging from 1.9 to 2.5 as elastomerizing agent;

(d) a polyisocyanate having all of its isocyanate groups blocked with a lactam as activator;

said reagents (a) to (d) being (i) distributed, prior to polymerization, among two distinct feeding tanks, one of said tanks containing a part of the omega-lactam (a) and the catalyst (b) and the other tank containing the remaining amount of omega-lactam (a) and the activator (d), the polyoxyalkylene-polyamine (c) being added to one of said two tanks or both; and (ii) first mixed and then transferred, at a temperature of from above 110°C to 125°C, into a mould heated to from 130°C to 170°C.

**2.** Process according to claim 1, wherein said omega-lactam (a) is selected from epsilon-caprolactam, omega-lauryl-lactam and mixtures thereof.

**3.** Process according to any of the preceding claims, wherein said polyoxyalkylene-polyamine (c) is a polyoxypropylene-diamine having an average amine functionality of about 2 and an average molecular weight of from 400 to 4,000, the amount of said diamine ranging from 1 to 60% by weight, based on the total weight of the reagents.

**4.** Process according to any of the preceding claims, wherein the amount of said catalyst (b) ranges from 0.1 to 2 equivalents per 100 moles of lactam to be converted.

**5.** Process according to any of the preceding claims, wherein the polyisocyanate of component (d) is selected from hexamethylene diisocyanate (HDI), toluene diisocyanate (TDI); methylene-bis (phenyl isocyanate) (MDI); biuretized HDI; HDI isocyanurate; (partially) biuretized TDI; (partially) biuretized MDI and mixtures thereof and preferably is HDI isocyanurate.

**6.** Process according to any of the preceding claims, wherein the amount of said polyisocyanate having blocked (NCO) groups (d) ranges from 0.2 to 15 equivalents per 100 moles of omega-lactam (a) to be polymerized, corresponding to an equivalent ratio (NCO)/(omega-lactam) of from 0.002 to 0.15.

**7.** Process according to any of the preceding claims, wherein the amounts of said polyisocyanate having blocked (NCO) groups (d) and said polyoxyalkylene-polyamine (c) having free ($NH_2$) groups are such that the equivalent ratio:

$(NCO)/(NH_2)$

is equal to or higher than 1.

**8.** Process according to any of the preceding claims, wherein the amount of said alkali metal lactamate (b) having a (NM) group, where M is an alkali metal ion, and the amount of polyisocyanate having blocked (NCO) groups (d) are such that the equivalent ratio:

(NCO)/(NM)

is equal to or higher than 1.

**9.** Process according to claim 8, wherein said equivalent ratio (NCO)/(NM) ranges from 1.5 to 15.

**10.** Process according to any of the preceding claims, wherein the equivalent ratio:

$(NCO) - (NH_2)/(NM)$

is equal to or higher than 0.01.

**11.** Process according to any of the preceding claims, wherein the polymerization is carried out in the presence of reinforcing agents.

**12.** Large-size formed articles, optionally containing reinforcing agents, obtainable according to the process of any of the preceding claims.

**13.** Use of the articles according to claim 12 in the sector of ships, motor vehicles and fixtures for shipyards.

## Patentansprüche

1. Verfahren zur Herstellung von Formkörpern aus modifiziertem Polyamid entsprechend dem Guß- oder dem Rotationspressverfahren mittels Polymerisation einer Mischung, die enthält:
   (a) ein Omega-Laktam;
   (b) einen Polymerisationskatalysator, ausgewählt aus Alkalimetallsalzen des genannten Omega-Laktams und Mischungen von diesen;
   (c) ein Polyoxyalkylen-Polyamin mit einem durchschnittlichen Molekulargewicht von 400 bis 5.000 und einer durchschnittlichen Amin-Funktionalität von 1,9 bis 2,5 als Elastomer-Charakter verleihendes Mittel;
   (d) ein Polyisocyanat, dessen gesamte Isocyanatgruppen mit einem Laktam als Aktivator blockiert sind;
   wobei die genannten Reaktionsteilnehmer (a) bis (d)
   (i) vor der Polymerisation auf zwei gesonderte Beschikkungsbehälter verteilt werden, von denen einer einen Teil des Omega-Laktams (a) und den Katalysator (b) enthält, während der andere Behälter die restliche Menge an Omega-Laktam (a) und den Aktivator (d) enthält, das Polyoxyalkylen-Polyamin (c) zu einem der genannten zwei Behälter oder zu beiden zugegeben wird; und
   (ii) diese Reaktionsteilnehmer zuerst vermischt und dann bei einer Temperatur von über 110° C bis 125° C in eine Form geleitet werden, die auf 130° C bis 170° C erhitzt wurde.

2. Verfahren nach Anspruch 1, worin das genannte Omega-Laktam (a) ausgewählt wurde aus Epsilon-Caprolaktam, Omega-Lauryllaktam und Mischungen davon.

3. Verfahren nach einem der vorhergehenden Ansprüche, worin das genannten Polyoxyalkylyen-Polyamin (c) ein Polyoxypropylendiamin mit einer durchschnittlichen Amin-Funktionalität von etwa 2 und einem durchschnittlichen Molekulargewicht von 400 bis 4.000 ist, wobei die Menge des genannten Diamins von 1 bis 60 Gew.-%, bezogen auf das Gesamtgewicht der Reaktionsteilnehmer, beträgt.

4. Verfahren nach einem der vorhergehenden Ansprüche, worin die Menge des genannten Katalysators (b) von 0,1 bis 2 Äquivalenten pro 100 Mol des umzusetzenden Laktams beträgt.

5. Verfahren nach einem der vorhergehenden Ansprüche, worin das Polyisocyanat der Komponente (d) ausgewählt wird aus Hexamethylen-diisocyanat (HDI), Toluol-diisocyanat (TDI), Methylen-bis-(phenylisocyanat) (MDI), Biuret-HDI; HDI-isocyanurat; TDI mit teilweiser Biuretbildung; MDI mit teilweiser Biuretbildung und Mischungen von diesen; und vorzugsweise HDI-isocyanurat ist.

6. Verfahren nach einem der vorhergehenden Ansprüche, worin die Menge des genannten Polyisocyanats mit blockierten (NCO)-Gruppen (d) von 0,2 bis 15 Äquivalenten pro 100 Mol des zu polymerisierenden Omega-Laktams (a) beträgt, was einem Äquialentverhältnis (NCO)/(Omega-Laktam) von 0,002 zu 0,15 entspricht.

7. Verfahren nach einem der vorhergehenden Ansprüche, worin die Mengen des genannten Polyisocyanats mit blockierten (NCO)-Gruppen (d) und des genannten Polyoxyalkylen-Polyamins (c) mit freien ($NH_2$)-Gruppen derart ist, daß das Äquivalentverhältnis (NCO)/($NH_2$) = 1 oder größer ist.

8. Verfahren nach einem der vorhergehenden Ansprüche, worin die Menge des genannten Alkalimetall-Laktams (b) mit einer (NM)-Gruppe, worin M ein Alkalimetall-Ion ist, und die Menge an Polyisocyanat mit blockierten (NCO)-Gruppen (d) derart ist, daß das Äquivalentverhältnis (NCO)/(NM) = 1 oder größer ist.

9. Verfahren nach Anspruch 8, worin das genannte Äquivalentverhältnis (NCO)/(NM) 1,5 bis 15 beträgt.

10. Verfahren nach einer der vorhergehenden Ansprüche, worin das Äquivalentverhältnis: (NCO) - ($NH_2$) / (NM) = 0,01 oder größer ist.

11. Verfahren nach einem der vorhergehenden Ansprüche, worin die Polymerisation in Anwesenheit von Verstärkungsmitteln erfolgt.

**12.** Große Formkörper, die gegebenenfalls Verstärkungsmittel enthalten, die nach dem Verfahren entsprechend einem der vorhergehenden Ansprüche erhalten wurden.

**13.** Verwendung der Formkörper nach Anspruch 12 auf dem Gebiet von Schiffen, Motorfahrzeugen und Ausstattungen zur Verwendung in Schiffswerften.

**Revendications**

**1.** Procédé de formation d'articles moulés à partir de polyamide modifié, de préférence de grande dimension, au moyen d'une polymérisation selon la technique de coulée ou la technique de moulage par rotation d'un mélange contenant:
(a) un oméga-lactame;
(b) un catalyseur de polymérisation choisi parmi les sels de métaux alcalins, en particulier les sels de sodium et de potassium dudit oméga-lactame et leurs mélanges;
(c) une polyoxyalkylène-polyamine présentant un poids moléculaire de 400 à 5000 et une fonctionnalité amine moyenne comprise entre 1,9 et 2,5 comme agents d'élastomérisation;
(d) un polyisocyanate dont tous les groupes isocyanates sont bloqués par un lactame comme activateur (promoteur);
lesdits réactifs (a) à (d) étant:
(i) distribués avant la polymérisation entre deux réservoirs d'alimentation distincts, l'un de ces réservoirs contenant une partie de l'oméga-lactame (a) et le catalyseur (b) et l'autre réservoir contenant la quantité restante d'oméga-lactame (a) et l'activateur (b), la polyoxyalkylène-polyamine (c) étant ajoutée à l'un desdits deux réservoirs ou aux deux; et
(ii) tout d'abord mélangés et ensuite transférés, à une température comprise entre 110 °C et 125 °C dans un moule chauffé à une température de 130 °C à 170 °C.

**2.** Procédé selon la revendication 1, dans lequel ledit oméga-lactame (a) est choisi parmi epsilon-caprolactame, oméga-lauryl-lactame et leurs mélanges.

**3.** Procédé selon l'une quelconque des revendications précédentes, dans lequel la polyoxyalkylène amine (c) est une polyoxypropylène diamine présentant une fonctionnalité amine moyenne d'environ 2 et un poids moléculaire de 400 à 4000, la quantité de ladite diamine étant comprise entre 1 à 60% par rapport au poids total des réactifs.

**4.** Procédé selon l'une quelconque des revendications précédentes, dans lequel la quantité dudit catalyseur (b) est comprise entre 0,1 et 2 équivalents pour 100 moles du lactame à convertir.

**5.** Procédé selon l'une quelconque des revendications précédentes, dans lequel le polyisocyanate du composant (d) est choisi parmi hexaméthylènediisocyanate (HDI), toluène diisocyanate (TDI), méthylène-bis(phénylisocyanate) (MDI), HDI biurétisé, HDI isocyanurate, TDI (partiellement) biurétisé, MDI (partiellement) biurétisé et leurs mélanges, et représente de préférence le HDI isocyanurate.

**6.** Procédé selon l'une quelconque des revendications précédentes, dans lequel la quantité dudit polyisocyanate renfermant des groupes (NCO) bloqués (d) est comprise entre 0,2 et 15 équivalents pour 100 moles d'oméga-lactame (a) à polymériser, ceci correspondant à un rapport équivalent (NCO)/(oméga-lactame) compris entre 0,002 et 0,15.

**7.** Procédé selon l'une quelconque des revendications précédentes, dans lequel les quantités dudit polyisocyanate renfermant des groupes (NCO) bloqués (d) et de ladite polyoxyalkèlène amine (c) renfermant des groupes ($NH_2$) libres sont tels que le rapport équivalent:
$(NCO)/(NH_2)$
est égal ou supérieur à 1.

**8.** Procédé selon l'une quelconque des revendications précédentes, dans lequel la quantité dudit lactamate (b) de métal alcalin renfermant un groupe (NM), M étant un ion de métal alcalin, et la quantité de polyisocyanate renfermant des groupes (NCO) bloqués (d) sont telles que le rapport équivalent:
(NCO)/(NM)
est égal ou supérieur à 1.

**9.** Procédé selon la revendication 8, dans lequel ledit rapport équivalent (NCO)/(NM) est compris entre 1,5 et 15.

**10.** Procédé selon l'une quelconque des revendications précédentes, dans lequel le rapport équivalent:
$(NCO) - (NH_2)/(NM)$
est égal ou supérieur à 0,01.

**11.** Procédé selon l'une quelconque des revendications précédentes, dans lequel la polymérisation est mise en oeuvre en présence d'agents de renforcement.

**12.** Articles moulés de grandes dimensions contenant éventuellement des agents de renforcement et pouvant être obtenu par le procédé selon l'une quelconque des revendications précédentes.

**13.** Utilisation des articles selon la revendication 12 dans le secteur des bateaux, des véhicules à moteur et des éléments de construction navale.